# EUROPÄISCHE PATENTSCHRIFT

(11) **EP 0 610 589 B1**
(45) Veröffentlichungstag und Bekanntmachung des Hinweises auf die Patenterteilung: **22.11.1995**
(21) Anmeldenummer: 93120624.7
(22) Anmeldetag: 21.12.1993
(51) Int. Cl.: H01G 2/14

(54) **Elektrischer Becherkondensator mit Überdruck-Abschaltsicherung**
Electrical capacitor with overpressure cut-off means
Condensateur électrique avec coupe-circuit en cas de surpression

(30) Priorität: 28.01.1993 DE 4302420
(43) Veröffentlichungstag der Anmeldung: 17.08.1994
(73) Patentinhaber: ROEDERSTEIN SPEZIALFABRIKEN FÜR BAUELEMENTE DER ELEKTRONIK UND KONDENSATOREN DER STARKSTROMTECHNIK GmbH, D-84003 Landshut (DE)
(72) Erfinder: Huber, Robert, D-84056 Rottenburg (DE)
(74) Vertreter: Finsterwald, Manfred, Dipl.-Ing., Dipl.-Wirtsch.-Ing.

(56) Entgegenhaltungen:
- WO-A-88/03700
- DE-A- 3 231 864
- DE-A- 3 440 683
- GB-A- 409 425
- US-A- 4 618 910

## Beschreibung

Die Erfindung betrifft einen elektrischen Becherkondensator mit einer Überdruck-Abschaltsicherung nach dem Oberbegriff des Patentanspruchs 1.

Selbstheilende Kondensatoren produzieren bei einem elektrischen Ausfall, hervorgerufen beispielsweise durch eine unzulässige elektrische Überlastung oder bei Erreichen des Endes der Lebensdauer, eine lokale Überhitzung, durch die das Dielektrikummaterial des Kondensators in gasförmige Stoffe zersetzt und verdampft wird. Die Umsetzung des organischen Dielektrikummaterials in Gas ergibt einen örtlichen Druckanstieg im Bereich des Kondensatorwickels.

Bei einem in einem gasdichten Gehäuse aufgenommenen Kondensator, einem sogenannten Becherkondensator, führt dies zum Aufbau eines Überdruckes im Innenraum des Gehäuses, was im Regelfall ein Aufplatzen oder eine Explosion des Kondensatorgehäuses zur Folge hat.

Da eine derartige Explosion eines Becherkondensators nicht nur die Zerstörung des Kondensators, sondern ebenfalls eine Gefährdung der den Kondensator umgebenenden Schaltung bedeutet, werden selbstheilende Becherkondensatoren bereits mit einer Überdruck-Abschaltsicherung versehen, die bei einem störungsbedingten Druckanstieg im Kondensatorgehäuse schlagartig die Stromzufuhr unterbricht, wodurch ein fortgesetzter Druckaufbau unterbunden und somit die Explosion des Kondensatorgehäuses verhindert wird.

Aus der DE 32 31 864 A1 ist ein elektrischer Becherkondensator mit einer Überdruck-Abschaltsicherung nach dem Oberbegriff des Anspruchs 1 bekannt, bei dem ein Wickelkondensator von einer Vergußummantelung umgeben in einem zylinderförmigen Kondensatorgehäuse feuchtigkeits- und luftdicht eingekapselt ist. Zwischen Vergußummantelung und Kondensatorkörper befindet sich ein stirnseitig offener, aus einem Isoliermaterial bestehender Innenbecher, dessen Seitenwand über den Umfang verteilt radial nach außen weisende Stützvorsprünge besitzt, die an der Wandung des Kondensatorgehäuses anliegen und zwischen denen und der Gehäusewandung längs verlaufende Kanäle ausgebildet sind, die mit einem oberhalb der Vergußummantelung vorgesehenen Druckraum in Verbindung stehen, in der die Überdruck-Abschaltvorrichtung aufgenommen ist.

Bei einem störungsbedingten Freiwerden von Druckgas im Bereich des Kondensatorwickels durchdringt dieses die gasdurchlässige Gußharzummantelung und verformt die elastisch ausgebildete Becherwandung in den Bereichen zwischen den Stützvorsprüngen radial nach außen, so daß zwischen verformter Becherwandung und Umfangsfläche der Vergußummantelung mit dem Druckraum in Verbindung stehende Kanäle geschaffen werden, durch die das Druckgas einen Weg in den Druckraum findet, so daß die dort vorhandene Abschaltsicherung anspricht.

Aufgabe der vorliegenden Erfindung ist es, einen im Aufbau einfachen und mit geringem fertigungstechnischen Aufwand herstellbaren Becherkondensator mit Überdruck-Abschaltsicherung zu schaffen, der eine gute Wärmeableitung zum Gehäuse besitzt und der bei einem elektrischen Ausfall eine Zerstörung des Kondensatorgehäuses sicher vermeidet.

Zur Lösung dieser Aufgabe sind die Merkmale des kennzeichnenden Teils des Patentanspruchs 1 vorgesehen.

Vorteilhafte Weiterbildungen und Ausgestaltungen der Erfindung sind Gegenstand von Unteransprüchen.

Wesentlich für die Erfindung ist, daß sich ebene Gehäuseseitenwände bei einer Druckbeaufschlagung wesentlich leichter ausbeulen und hierdurch zum Druckraum hin offene Verbindungen geschaffen werden können, als dies bei gekrümmten Seitenwänden der Fall ist. Dabei ist gleichzeitig von Vorteil, daß im Normalbetrieb das Vergußmaterial über die gesamte Umfangsfläche mit dem Gehäuse in Verbindung steht und somit eine optimale Wärmeableitung gewährleistet ist. Darüberhinaus wird im Vergleich zu der in der DE 32 31 864 A1 beschriebenen Lösung die Verwendung eines speziell geformten Bechers zur Gewährleistung der Ausbreitung des Druckes in den Druckraum überflüssig. Herstellungstechnisch ist die mit der vorliegenden Erfindung gefundene Lösung denkbar einfach, da das den Wickelkondensator umgebende Gehäuse lediglich mit einem Gießharz vollgegossen zu werden braucht.

Eine vorteilhafte Ausführungsform kennzeichnet sich dadurch, daß der Wickelkondensator in einem ausreichenden Abstand zum Gehäuseboden angeordnet ist. Durch die zwischen dem Wickelkondensator und dem Gehäuseboden liegende Vergußschicht wird der Gehäuseboden verstärkt und somit eine im Falle eines Druckanstiegs auftretende Überlastung im Bodenbereich des Gehäuses vermieden.

Um eine die Ausbauchung der Gehäusewand behindernde Haftung zwischen Vergußmaterial und Gehäusewand zu vermeiden, ist es zweckmäßig, zwischen Seitenwänden und Vergußmaterial ein Anti-Haft-Öl anzubringen.

Durch die Verwendung eines elastischen Harzes geringer Festigkeit mit einer Shore-Härte kleiner als 70 wird die Ausbreitung des Gasdruckes im Vergußmaterial vorteilhaft beeinflußt.

Besteht das Gehäuse aus einem Metallmaterial, so kennzeichnet sich eine vorteilhafte Ausführungsform dadurch, daß zwischen den Seitenwänden des Gehäuses und dem Vergußmaterial zumindest eine, im Bereich des Wickelkondensators liegende elektrisch nicht leitende, nicht haftende Isoliereinlage vorgesehen ist, die zusätzlich mit einem Trennöl benetzt sein kann.

Die Erfindung wird im folgenden beispielsweise anhand der Zeichnung beschrieben; in dieser zeigt:
- Fig. 1: eine perspektivische, aufgeschnittene Seitenansicht eines elektrischen Becherkondensators mit einer Überdruck-Abreißsicherung im Normalzustand,
- Fig. 2: die gleiche Seitenansicht wie Fig. 1 eines elektrischen Becherkondensators im Auslösezustand,
- Fig. 3: eine perspektivische, aufgeschnittene Seitenansicht eines Becherkondensators mit einer einen Drucksensor aufweisenden Überdruck-Abschaltsicherung im Normalzustand, und
- Fig. 4: die gleiche Ansicht wie Fig. 3 eines elektrischen Becherkondensators im Auslösezustand.

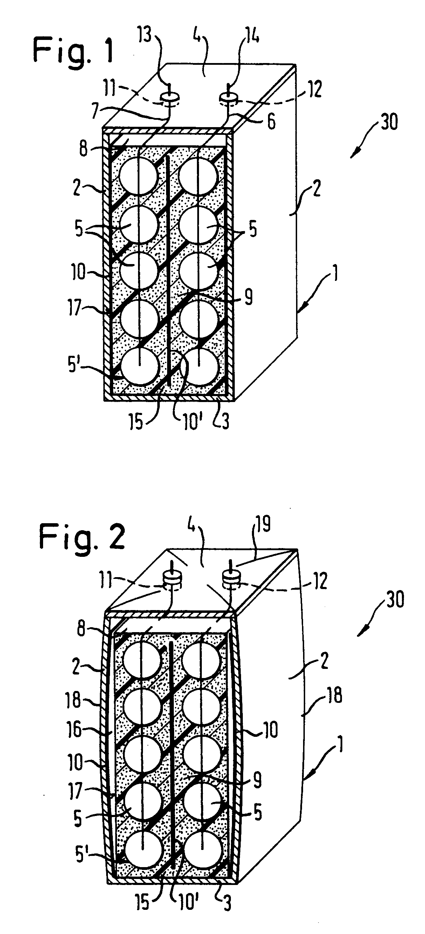

Fig. 1 zeigt einen erfindungsgemäßen Becherkondensator 30, bestehend aus einem quaderförmigen Metallgehäuse 1 mit vier Seitenwänden 2, einer Bodenwand 3 und einem Gehäusedeckel 4. Innerhalb des Gehäuses befinden sich insgesamt zehn elektrisch miteinander verbundene, paarweise mit parallel zur Deckelfläche 4 verlaufenden Längsachsen nebeneinanderliegend angeordnete Wickelkondensatoren 5, deren elektrische Zuleitungen 6, 7 durch den Gehäusedeckel 4 geführt sind. Der Innenraum des Gehäuses 1 ist bis auf einen deckelseitig angeordneten vergußfreien Druckraum 8 mit einem die Wickelkondensatoren 5 allseits feuchtigkeits- und luftisolierend umschließenden Vergußmaterial 9, insbesondere einem Gießharz, vergossen. Zwischen den Innenflächen der Seitenwände 2 und dem Vergußmaterial 9 ist eine elektrisch nicht leitende Isoliereinlage 10 vorgesehen, deren Zweck es auch ist, während eines Ausfallablaufs die Isolation zum metallischen Gehäuse 1 zu gewährleisten. Weiterhin erstreckt sich zwischen den nebeneinanderliegend angeordneten Wickelkondensatoren 5 eine weitere Isoliereinlage 10′ zum Zwecke der gegenseitigen Isolation der Wickelkondensatoren 5.

Die Überdruck-Abreißsicherung des Becherkondensators 30 wird durch die deckelseitig aus dem Vergußmaterial 9 austretenden und dort fixierten Anschlußdrähte 6, 7 gebildet, die hierfür straff gespannt durch den Druckraum 8 verlaufen und an den am Gehäusedeckel 4 vorgesehenen elektrischen Durchführungen 11, 12 befestigt sind, die an der Außenseite des Deckels 4 als Lötfahnen 13, 14 ausgebildet sind. Zur Verbesserung der gegenseitigen Isolation der Anschlußdrähte 6, 7 insbesondere bei Hochleistungskondensatoren kann innerhalb des Druckraumes 8 ein Schutzgas, beispielsweise Schwefelhexafluorid, vorgesehen sein.

Das der Bodenwand 3 nächstliegendste Wickelkondensatorenpaar 5′ weist einen vorgegebenen Abstand zur Bodenwand 3 auf, der einen vollständig vergossenen, die Stabilität des Gehäuses 1 im Bodenbereich verbessernden Abstandstandsbereich 15 definiert.

Tritt nun alterungsbedingt oder aufgrund einer elektrischen Überlastung an einem Wickelkondensator 5 ein elektrischer Ausfall bzw. Durchschlag ein, erfolgt schlagartig eine lokale Überhitzung des Dielektrikummaterials des Wickelkondensators 5. Hierbei wird das organische Dielektrikum des Wickelkondensators 5, beispielsweise Polypropylen, thermisch zersetzt und in gasförmige Stoffe umgewandelt. Dadurch wird ein lokaler Druckanstieg im Bereich des betreffenden Wickelkondensators 5 hervorgerufen, der sich in das den Wickelkondensator 5 umgebende, vom Druckgas durchdringbare Vergußmaterial 9 ausbreitet.

Da eine möglichst ungehinderte Fortpflanzung des sich aufbauenden Drucks durch das Vergußmaterial 9 erwünscht ist, werden als Vergußmaterialien 9 bevorzugt Gießharze mit einer vergleichsweise geringen Festigkeit verwendet. Weiterhin kann zur Erhöhung der Elastizität des Gießharzes 9 dem Gießharz 9 ein Flexibilisierungsmittel zugesetzt sein.

Tritt der elektrische Ausfall und der damit verbundene lokale Druckanstieg im Vergußmaterial 9 nicht zufälligerweise gerade im Bereich des Druckraumes 8 auf, so wird, bevor sich eine Druckerhöhung im Druckraum 8 einstellen kann, die Druckwelle zumindest eine der ebenen Seitenwände 2 erreichen.

Wie in Fig. 2 dargestellt, wird durch den im Bereich der Seitenwand 2 erfolgenden Druckanstieg die Seitenwand 2 samt der an ihr anliegenden Isoliereinlage 10 nach außen gewölbt, wodurch zwischen Vergußmaterial 9 und Isoliereinlage 10 ein mit dem Druckraum 8 in Verbindung gelangender Freiraum 16 geschaffen wird. Als Folge davon steigt der Druck im Druckraum 8 sofort an und bewirkt eine nach außen gerichtete Aufwölbung 19 des Gehäusedeckels 4. Dabei werden die am Gehäusedeckel 16 angebrachten elektrischen Durchführungen 11, 12 nach außen versetzt, was zu einem in Fig. 2 dargestellten Abreißen der elektrischen Anschlußdrähte 6, 7 innerhalb des Druckraumes 8 führt. Das Abreißen der Anschlußdrähte 6, 7 unterbricht schlagartig die elektrische Stromzufuhr zu den Wickelkondensatoren 5 und unterbindet somit einen weiteren Druckaufbau innerhalb des Gehäuses 1.

Um eine verklebungsfreie Anlage der Isoliereinlage 10 an der Umfangsfläche 17 des Vergußmaterials 9 zu gewährleisten, ist die Isoliereinlage 10 mit einem Trennöl benetzt. Als Trennöle können die bekannten Imprägniermittel, mit denen ebenfalls die Wickelkondensatoren 5 behandelt sind, verwendet werden.

Besteht das Kondensatorgehäuse 1 nicht aus Metall sondern aus einem elektrisch nicht leitenden Kunststoffmaterial, so ist das Vorsehen einer die Wickelkondensatoren 5 elektrisch von der Seitenwand 2 des Gehäuses 1 trennenden Isoliereinlage 10 nicht notwendig. In diesem Fall liegen die Innenflächen der Seitenwände 2 des Gehäuses 1 direkt an der Umfangsfläche 17 des Vergußmaterials 9 an. Dabei kann zwischen Umfangsfläche 17 des Vergußmaterials 9 und Innenfläche der Seitenwand 2 die Anwendung eines die gegenseitige Haftung vermindernden Anti-Haft-Öles vorgesehen sein kann, falls beim Vergießen des Kondensatorgehäuses 1 eine klebende oder haftende Verbindung zwischen Vergußmaterial 9 und Gehäusewandung 1 erwartet werden muß.

Tritt der elektrische Ausfall und der hiermit verbundene lokale Druckanstieg an einem Wickelkondensator 5′ im Bereich der Bodenwand 3, d. h. vergleichsweise weit entfernt vom Druckraum 8 auf, so muß auch in diesem Fall ein rechtzeitiges Ansprechen der Überdruck-Abreißsicherung im Druckraum 8 gewährleistet sein. Dazu trägt der vollvergossene Abstandsbereich 15 bei, durch den ein ausreichend großer Abstand zwischen den bodenseitigen Wickelkondensatoren 5′ und der Bodenwand 3 geschaffen wird.

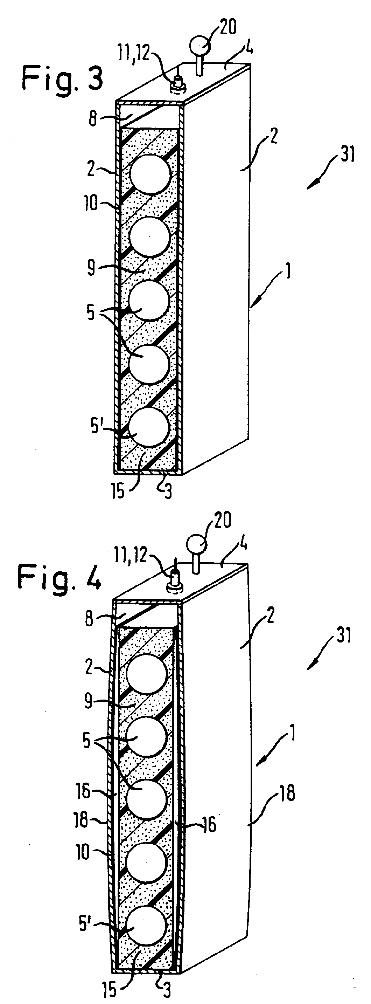

In den Figuren 3 und 4 ist ein weiterer erfindungsgemäßer elektrischer Becherkondensator 31 mit Überdruck-Abschaltsicherung dargestellt, der sich von der in den Figuren 1 und 2 gezeigten Ausführung durch eine veränderte Anordnung der Wickelkondensatoren 5 und durch eine andere Ausführung der Überdruck-Abschaltsicherung unterscheidet.

Nach Fig. 3 sind im Gehäuse 1 fünf Wickelkondensatoren 5 übereinanderliegend mit zum Gehäusedeckel 4 parallel verlaufender Längsachse angeordnet. Hierdurch ist gewährleistet, daß jeder Wickelkondensator 5 in unmittelbarer Nähe zu beiden an den Längsseiten der Wickelkondensatoren 5 vorbeiführenden Seitenwänden 2 liegt, wodurch bei Freiwerden eines Druckgases an einem der Wickelkondensatoren 5 stets eine schnelle Ausbreitung des Gasdrucks zu den Seitenwänden 2 hin sichergestellt ist. Die erfindungsgemäße Weiterleitung des Gasdruckes in den Druckraum 8 erfolgt auf die bereits beschriebene Weise durch eine Ausbeulung 18 der Seitenwände 2 und ist in Fig. 4 dargestellt.

Der Deckel 4 weist neben den elektrischen Durchführungen 11, 12 zusätzlich einen Drucksensor 20 auf, der beim Auftreten eines vorgebbaren Druckes die elektrische Stromzuführung zu den Wickelkondensatoren 5 unterbricht. Der Deckel 4 des Druckraumes 8 ist hier nicht flexibel ausgeführt und erfährt daher, wie aus Fig. 4 ersichtlich, beim Auftreten eines Überdruckes in der Druckkammer 4 keine wesentliche Deformation.

Durch die Erhöhung der Stabilität des Deckels 4 wird im Falle einer elektrischen Störung die Gefahr des Herausschießens des Gußmaterials 9 mitsamt Wickelkondensatoren 5 aus dem Kondensatorgehäuse 1 weiter vermindert und somit die Funktionssicherheit der Überdruck-Abschaltsicherung erhöht.

Funktionell sind die in den Figuren 1 und 2 bzw. 3 und 4 dargestellten Ausführungsbeispiele unmittelbar vergleichbar und gewährleisten stets, daß bei einem Druckaufbau im Kondensatorgehäuse 1 rechzeitig vor einer Zerstörung des Gehäuses 1 ein den weiteren Druckaufbau beendendes Ansprechen der Überdruck-Abschaltsicherung erfolgt.

## Patentansprüche

1. Elektrischer Becherkondensator mit Überdruck-Abschaltsicherung, bestehend aus einem allseitig geschlossenen Gehäuse (1), zumindest einem im Gehäuse (1) angeordneten Wickelkondensator (5) mit deckenseitig durch das Gehäuse (1) geführten elektrischen Anschlüssen (6,7), einem den Wickelkondensator (5) umschließenden, von Druckgas durchdringbaren, isolierenden Vergußmaterial (9) und einem zwischen dem Gehäusedeckel (4) und dem Vergußmaterial (9) gelegenen Druckraum (8), durch den sich die bei Auftreten eines vorgebbaren Überdrucks unterbrechbaren elektrischen Anschlüsse (6,7) erstrecken,
dadurch **gekennzeichnet,**
daß das Gehäuse (1) zumindest zwei im wesentlichen eben ausgebildete, bei Freiwerden von Druckgas ausbeulbare und Verbindungen (16) zum Druckraum (8) schaffende Seitenwände (2) aufweist.

2. Elektrischer Becherkondensator nach Anspruch 1,
dadurch **gekennzeichnet,**
daß das Gehäuse (1) im Querschnitt Rechteckform aufweist.

3. Elektrischer Becherkondensator nach Anspruch 2,
dadurch **gekennzeichnet,**
daß das Gehäuse (1) im Querschnitt eine quadratische Form aufweist.

4. Elektrischer Becherkondensator nach Anspruch 1, 2 oder 3,
dadurch **gekennzeichnet,**
daß der Wickelkondensator (5) in einem vorgebbaren Abstand (15) zur Bodenfläche (3) des Gehäuses (1) angeordnet ist.

5. Elektrischer Becherkondensator nach Anspruch 1 bis 4,
dadurch **gekennzeichnet,**
daß im Gehäuse (1) mehrere elektrisch miteinander verbundene, übereinander- und/oder nebeneinanderliegend angeordnete Wickelkondensatoren (5) vorgesehen sind.

6. Elektrischer Becherkondensator nach Anspruch 1 bis 5,
dadurch **gekennzeichnet,**
daß die Wickelkondensatoren (5) im Gehäuse (1) mit zur Deckenfläche paralleler Längsachse angeordnet sind.

7. Elektrischer Becherkondensator nach Anspruch 1 bis 6,
dadurch **gekennzeichnet,**
daß das Gehäuse (1) aus einem Metall- oder Kunststoffmaterial besteht.

8. Elektrischer Becherkondensator nach Anspruch 1 bis 7,
dadurch **gekennzeichnet,**
daß zwischen Seitenwänden (2) und Vergußmaterial (9) ein Anti-Haft-Öl vorgesehen ist.

9. Elektrischer Becherkondensator nach Anspruch 1 bis 8,
dadurch **gekennzeichnet,**
daß das Vergußmaterial (9) ein elastisches Harz geringer Festigkeit mit einer Shore-Härte kleiner als 70 ist.

10. Elektrischer Becherkondensator nach Anspruch 1 bis 9,
dadurch **gekennzeichnet,**
daß zwischen den Seitenwänden (2) und dem Vergußmaterial (9) zumindest eine, im Bereich des Wickelkondensators (5) liegende, elektrisch nichtleitende und nichthaftende Isoliereinlage (10) vorgesehen ist.

11. Elektrischer Becherkondensator nach Anspruch 1 bis 10,
dadurch **gekennzeichnet,**
daß zwischen nebeneinanderliegend angeordneten Wickelkondensatoren (5) eine elektrisch nichtleitende Isoliereinlage (10′) vorgesehen ist.

12. Elektrischer Becherkondensator nach Anspruch 10 oder 11,
dadurch **gekennzeichnet,**
daß die Isoliereinlage (10) mit einem Trennöl benetzt ist.

13. Elektrischer Becherkondensator nach Anspruch 1 bis 12,
dadurch **gekennzeichnet,**
daß die elektrischen Anschlüsse (6,7) am Deckel (4) fixiert sind und bei einer durch die Ausbeulung (18) der Seitenwände (2) erfolgenden Druckgasbeaufschlagung des Druckraumes (8) von dem sich nach außen wölbenden Deckel (19) oberhalb des Vergußmaterials (9) abgerissen werden.

14. Elektrischer Becherkondensator nach Anspruch 1 bis 12,
dadurch **gekennzeichnet,**
daß die Abschaltsicherung aus einem mit dem Druckraum (8) in Verbindung stehenden Überdrucksensor (20) besteht, der bei einer durch die Ausbeulung (18) der Seitenwände erfolgenden Druckgasbeaufschlagung des Druckraumes (8) die elektrischen Anschlüsse (6,7) unterbricht.

## Claims

1. Electrical cup capacitor with overpressure cut-off means comprising a housing (1) closed on all sides, at least one wound capacitor (5) arranged within the housing (1) and housing electrical connections (6, 7) led out through the housing (1) at the roof side, an insulating potting material (9) permeable to pressurised gas which surrounds the wound capacitor (5), and a pressure space (8) disposed between the housing cover (4) and the potting material (9) and through which the electrical connections (6, 7) which are interruptible on the occurence of a predeterimable excess pressure extend, characterised in that the housing (1) has at least two substantially flat shaped side walls (2) which can bow outwardly on the release of pressurised gas and provide connections (16) to the pressure space (8).

2. Electrical cup capacitor in accordance with claim 1, characterized in that the housing has a rectangular shape in cross-section.

3. Electrical cup capacitor in accordance with claim 2, characterised in that the housing (1) has a square shape in cross-section.

4. Electrical cup capacitor in accordance with claim 1, 2 or 3, characterized in that the wound capacitor (5) is arranged at a predeterminable spacing (15) from the base surface (3) of the housing (1).

5. Electrical cup capacitor in accordance with claim 1 to 4,
characterized in that that a plurality of wound capacitors (5) which are electrically connected together are provided in the housing (1) arranged above one another and/or alongside one another.

6. Electrical cup capacitor in accordance with claim 1 to 5, characterized in that the wound capacitors (5) are arranged in the housing (1) with their longitudinal axis parallel to the roof surface.

7. Electrical cup capacitor in accordance with claim 1 to 6, characterized in that that the housing (1) consists of a metal material or of a plastic material.

8. Electrical cup capacitor in accordance with claim 1 to 7, characterized in that an anti-sticking oil is provided between the side walls (2) and the potting material (9).

9. Electrical cup capacitor in accordance with claim 1 to 8, characterized in that the potting material (9) is a resilient resin of bow strength with a shore hardness of less than 70.

10. Electrical cup capacitor in accordance with claim 1 to 9, characterized in that at least one electrically non-conductive and non-sticking isolating insert (10) lying in the region of the wound capacitor is provided between the side walls (2) and the potting material (9).

11. Electrical cup capacitor in accordance with claim 1 to 10, characterized in that an electrically non-conductive isolating insert (10′) is provided between two wound capacitors (5) which lie alongside one another.

12. Electrical cup capacitor in accordance with claim 10 or 11, characterized in that the isolating insert (10) is wetted with a separating oil.

13. Electrical cup capacitor in accordance with claim 1 to 12, characterized in that the electrical connections (6, 7) are fixed at the cover (4) and are torn off from the outwardly bowing cover (19) above the potting material (9) when the pressure space (8) is subjected to pressurised gas through the outward bulging (18) of the side walls (2).

14. Electrical cup capacitor in accordance with claim 1 to 12, characterized in that the switch off device comprises an overpressure sensor (20) which stands in connection with the pressure space (8) and which interrupts the electrical connections (6, 7) when the pressure space (8) is subjected to pressurised gas through the outward bulging (18) of the side walls.

## Revendications

1. Condensateur électrique en boîtier à sécurité d'extinction en cas de surpression, constitué d'un boîtier (1) fermé de toutes parts, d'au moins un condensateur à enroulement (5) placé dans le boîtier (1) avec des branchements électriques (6, 7) passant à travers le couvercle du boîtier (1), un matériau d'enrobage isolant (9) perméable à un gaz sous pression et entourant le condensateur à enroulement (5), et une chambre de pression (8) située entre le couvercle (4) du boîtier et le matériau d'enrobage (9), chambre à travers laquelle s'étendent les branchements électriques (6, 7) interrompus en cas de surpression prédéterminable, caractérisé en ce que le boîtier (1) présente au moins deux parois latérales (2) formées pour l'essentiel planes se déformant en bosse lors de la libération d'un gaz sous pression et créant des liaisons (16) à la chambre de pression (8).

2. Condensateur électrique en boîtier selon la revendication 1, caractérisé en ce que le boîtier (1) présente en coupe transversale une forme rectangulaire.

3. Condensateur électrique en boîtier selon la revendication 2, caractérisé en ce que le boîtier (1) présente en coupe transversale une forme carrée.

4. Condensateur électrique en boîtier selon la revendication 1, 2 ou 3, caractérisé en ce que le condensateur à enroulement (5) est placé à une distance prédéterminable (15) de la surface de fond (3) du boîtier (1).

5. Condensateur électrique en boîtier selon l'une des revendications 1 à 4, caractérisé en ce que plusieurs condensateurs à enroulement (5) reliés électriquement entre eux, placés les uns sur et/ou à côté des autres, sont prévus dans le boîtier (1).

6. Condensateur électrique en boîtier selon l'une des revendications 1 à 5, caractérisé en ce que les condensateurs à enroulement (5) sont placés dans le boîtier (1) avec leurs axes longitudinaux parallèles à la surface de fond.

7. Condensateur électrique en boîtier selon l'une des revendications 1 à 6, caractérisé en ce que le boîtier (1) est constitué de métal ou d'une matière synthétique.

8. Condensateur électrique en boîtier selon l'une des revendications 1 à 7, caractérisé en ce qu'une huile anti-adhérence est prévue entre les parois latérales (2) et le matériau d'enrobage (9).

9. Condensateur électrique en boîtier selon l'une des revendications 1 à 8, caractérisé en ce que le matériau d'enrobage (9) est une résine élastique de faible résistance, d'une dureté Shore inférieure à 70.

10. Condensateur électrique en boîtier selon l'une des revendications 1 à 9, caractérisé en ce qu'au moins une couche isolante (10) non adhérente et non conductrice électrique, située au niveau du condensateur à enroulement (5), est prévue entre les parois latérales (2) et le matériau d'enrobage (9).

11. Condensateur électrique en boîtier selon l'une des revendications 1 à 10, caractérisé en ce qu'une couche isolante (10′) non conductrice électrique est prévue entre des condensateurs à enroulement (5) placés les uns à côté des autres.

12. Condensateur électrique en boîtier selon la revendication 10 ou 11, caractérisé en ce que la couche isolante (10) est revêtue d'une huile de séparation.

13. Condensateur électrique en boîtier selon l'une des revendications 1 à 12, caractérisé en ce que les branchements électriques (6, 7) sont fixés sur le couvercle (4) et, lors d'une exposition de la chambre de pression (8) à un gaz sous pression résultant d'une déformation en bosse des parois latérales (2), sont arrachés du couvercle (4) se bombant vers l'extérieur au-dessus du matériau d'enrobage (9).

14. Condensateur électrique en boîtier selon l'une des revendications 1 à 12, caractérisé en ce que la sécurité d'extinction est constituée d'un capteur de surpression (20) en liaison avec la chambre de pression (8), lequel coupe les branchements électriques (6, 7) lors d'une exposition de la chambre de pression (8) résultant de la déformation en bosse (18) des parois latérales.
